# EUROPÄISCHE PATENTANMELDUNG

(11) **EP 3 818 823 A1**
(43) Veröffentlichungstag der Anmeldung: **12.05.2021**
(21) Anmeldenummer: 20205937.4
(22) Anmeldetag: 05.11.2020
(51) Int. Cl.: A01K 9/00, A61J 11/00

(54) **SAUGER FÜR EINE TRÄNKVORRICHTUNG UND VERFAHREN ZUR HERSTELLUNG EINES SAUGERS**

(30) Priorität: 06.11.2019 DE 102019129941
(71) Anmelder: H I K O GmbH, 89081 Ulm (DE)
(72) Erfinder: Hinterkopf, Martin, 89081 Ulm-Lehr (DE)
(74) Vertreter: Baur & Weber Patentanwälte PartG mbB

(57) **Zusammenfassung**

Es wird ein Sauger für eine Tränkvorrichtung, insbesondere für einen Tränkeimer oder für eine Steigrohrvorrichtung zur Fütterung eines Kalbs, beschrieben, der aus einem Naturkautschukmaterial gefertigt ist, das mit einem auf eine Schleimhaut eines Säugetiers wirkenden Reizstoff versetzt ist. Des Weiteren wird ein Verfahren zur Herstellung eines Saugers für eine Tränkvorrichtung, insbesondere für einen Tränkeimer oder für eine Steigrohrvorrichtung zur Fütterung eines Kalbs, angegeben.

## Beschreibung

Die Erfindung betrifft einen Sauger für eine Tränkvorrichtung sowie ein Verfahren zur Herstellung eines Saugers für eine Tränkvorrichtung, insbesondere für einen Tränkeimer oder für eine Steigrohrvorrichtung zur Fütterung eines Jungtiers.

Tränkvorrichtungen in Form eines Eimers sind aus dem Stand der Technik bereits bekannt, insbesondere zur Aufzucht von Jungtieren, wie z. B. Kälber oder Lämmer.

So ist in der DE 8712611 U1 ein Eimer zum Tränken von Tieren beschrieben, der einen Saugzapfen an einer die Eimerwand durchdringenden Durchführung und eine Einrichtung zum Einhängen des Eimers in eine Tragvorrichtung aufweist, wobei die Einrichtung zum Einhängen wenigstens je einen Durchbruch in der Eimerwand auf der Seite des Saugzapfens und der gegenüber liegenden Seite und wenigstens einen Durchbruch in einer unterhalb des Eimerbodens liegenden Randzone aufweist. Tränkeimer werden mit einer entsprechenden Saugvorrichtung versehen, so dass Kälber oder Lämmer Flüssignahrung insbesondere Milch aus dem Behälter aufnehmen können. Derartige Saugvorrichtungen können beispielsweise ein Ventil umfassen.

Derartige Tränkeimer haben sich in der landwirtschaftlichen Praxis, insbesondere zum Tränken von Kälbern und Lämmern seit vielen Jahrzehnten bewährt

Ein Problem, welches die auf dem Markt verfügbaren Tränkeimer nicht lösen, betrifft die Vermehrung von Krankheitserregern im Inneren der Tränkeimer. In diesem, der sinngemäßen Nutzung bedingt, feuchten Milieu kommt es rasch zur Vermehrung von Krankheitserregern wie Bakterien, Pilzen, Viren oder ähnlichem, welche die Tiergesundheit gefährden. Insbesondere Jungtiere wie Lämmer oder Kälber erkranken bedingt durch ihr noch nicht vollständig ausgebildetes Immunsystem häufig an intestinalen (darmassoziierten) Erkrankungen, welche beispielsweise durch den gramnegativen Erreger Escherichia Coli (E. coli) verursacht werden.

Aus der EP 2 160 942 B1 ist eine Ventilvorrichtung für einen Saugnuckel zum Anschließen an eine seitliche Öffnung eines Sauggetränkeeimers bekannt, bei der ein Ventilkörper mit einem Ventilkanal vorgesehen ist, an dessen dem Saugnuckel zugewandten Ende eine Ventilklappe vorgesehen ist, die einen Rückfluss von Nahrungsflüssigkeit in den Saugetränkeeimer durch den Ventilkanal hindurch stoppt. Dabei ist an dem einem Saugetränkeeimer zugewandten Ende des Ventilkörpers ein Saugrüssel ein- oder aufsteckbar und zum Verbinden des Saugnuckels mit der vom Saugetränkeeimer abgewandten Seite des Ventilkörpers ein mit dem Ventilkörper verbindbarer Bajonettverschluss oder Klickverschluss vorgesehen.

Des Weiteren sind Tränkstationen bekannt, die an einem flächigen Befestigungselement ein oder mehrere Saugvorrichtungen aufweisen, die über ein Schlauchsystem mit Flüssignahrung versorgt werden. Derartige Tränkstationen werden oftmals auch als Steigrohrvorrichtung bezeichnet. Die Saugvorrichtungen können dabei denjenigen für Tränkeimer entsprechen.

Saugvorrichtungen, im Folgenden allgemein als Sauger für eine Tränkvorrichtung bezeichnet, werden häufig aus Naturkautschuk hergestellt. Naturkautschuk wird aufgrund der guten Verträglichkeit oftmals bei Jungtieren eingesetzt, wobei ein möglichst natürliches Saugverhalten die Nahrungsaufnahme verbessert.

Aus der DE 10 2016 203 477 A1 ist ein Verfahren zur Herstellung von Alkalimetalldiformiaten, speziell der Kalium- und/oder Natriumdiformiate in fester Form, sowie in Formulierung mit mittelkettigen Fettsäuren oder deren Derivaten. Die Produkte, welche einen hohen Gehalt an kurz- und mittelkettigen organischen Säuren aufweisen, finden in Tierfuttermitteln, als Säureregulator, Konservierungsmittel, Silierhilfsmittel und als Tierwachstums- und Leistungsförderer Verwendung. Die mittelkettigen Fettsäurederivate wirken dabei sowohl als Aktivsubstanz als auch als Fließ- und Trennmittel.

Für die Aufzucht im Jungtierbereich ist es wünschenswert, schnelles Wachstum bei gleichzeitig geringem Krankheitsrisiko herbeiführen zu können, was durch entsprechende Hygienemaßnahmen und Auswahl des Futters erreicht werden könnte. Ein in diesem Zusammenhang wenig beachtetes Problem stellt hierbei die Auswahl des Saugers dar, wobei hier bisher lediglich bezüglich der Materialauswahl oder auch der Form entsprechende Maßnahmen getroffen wurden, um ein möglichst natürliches Saugverhalten an einem Tränkeimer oder einer Steigrohrvorrichtung imitieren zu können.

Vor diesem Hintergrund hat sich der Erfinder nun die Aufgabe gestellt, einen Sauger für Tränkvorrichtungen zu schaffen, der sowohl die Nahrungsmittelaufnahme steigert als auch die Tiergesundheit fördert.

Diese Aufgabe wird durch die Merkmale des Patentanspruchs 1 gelöst. Vorteilhafte Weiterbildungen der Erfindung sind jeweils Gegenstand der Unteransprüche. Diese können in technologisch sinnvoller Weise miteinander kombiniert werden. Die Beschreibung, insbesondere im Zusammenhang mit der Zeichnung, charakterisiert und spezifiziert die Erfindung zusätzlich.

Gemäß der Erfindung wird ein Sauger für eine Tränkvorrichtung, insbesondere für einen Tränkeimer oder für eine Steigrohrvorrichtung zur Fütterung eines Kalbs, geschaffen, der aus einem Naturkautschukmaterial gefertigt ist, das mit einem auf eine Schleimhaut eines Säugetiers wirkenden Reizstoff versetzt ist.

Der Reizstoff wirkt auf Schleimhäute eines Säugetiers, so dass sich sowohl Geruch über die Nasenschleimhaut, Geschmack über die Mund- beziehungsweise Maulschleimhaut oder auch andere die Nahrungsmittelaufnahme oder die Tiergesundheit fördernde Eigenschaften beim Einwirken auf die Schleimhäute im Magen-/Darmtrakt gezielt beeinflussen lassen. Unter dem Säugetier ist zunächst das zu säugenden Kalb zu verstehen.

Dabei kann der Reizstoff ein Ergänzungsfuttermittel sein, wobei das Naturkautschukmaterial mit dem Ergänzungsfuttermittel in einer Konzentration von bis zu 2 Gew.-% versetzt ist.

Es zeigt sich überraschenderweise, dass die Zugabe eines Ergänzungsfuttermittels die Nahrungsaufnahme von Jungtieren begünstigt, wobei das Ergänzungsfuttermittel darüber hinaus auch Einflüsse auf die Tiergesundheit ausübt, wodurch sowohl ein antimikrobieller als auch ein antiinflammatorischer Effekt erreicht wird. Das Ergänzungsfuttermittel löst sich während der Benutzung des Saugers durch Speichel langsam auf, so dass die darin enthaltenen Wirkstoffe vom Tier aufgenommen werden. Dies führt insgesamt zu einer erhöhten Futteraufnahme, wobei zusätzliche gesundheitsfördernde Eigenschaften des Ergänzungsfuttermittels ebenfalls zum Tragen kommen. Zwar ist die Zugabe von Ergänzungsfuttermitteln, die üblicherweise in Granulatform vorliegen, bei der Abgabe von Futtermitteln durchaus bekannt, dies jedoch bei einem Sauger für eine Tränkvorrichtung einzusetzen, erzielt überraschenderweise ebenfalls deutliche Verbesserungen, wie Versuche mit Kälbern gezeigt haben. Die dabei abgegebene Menge ist zwar relativ gering, ein Sauger muss jedoch aufgrund der starken mechanischen Belastung durch hungrige Jungtiere in kurzen Zeitabschnitten ersetzt werden, so dass über den erfindungsgemäßen Sauger eine stetige Abgabe von Ergänzungsfuttermittel erfolgt.

Gemäß einer Ausführungsform der Erfindung liegt das Ergänzungsfuttermittel als Fütterungssäuregranulat vor.

Ergänzungsfuttermittel werden auch als nicht korrosive granulierte Fütterungssäuren bereitgestellt, die hochkonzentriert dem Sauger beigemischt werden können.

Gemäß einer weiteren Ausführungsform der Erfindung umfasst das Ergänzungsfuttermittel Natriumformiat und Ameisensäure, wobei dem Ergänzungsfuttermittel zusätzlich Pflanzenextrakte und Pflanzenöl beigemischt sind.

Formiatverbindungen wirken bekanntlich gegen gram-negative Bakterien und erreichen zusammen mit pflanzlichen Extrakten und Pflanzenöl einen hohen Gesamtwirkstoffgehalt. Zusätzliche pflanzliche Extrakte wirken auf die Darmflora und darüber hinaus auch gegen gram-positive Bakterien. Ein derartiges Ergänzungsfuttermittel steigert daher die Enzyminteraktion im Verdauungstrakt und ist zusammen mit der Milchabgabe für eine verbesserte Nahrungsmittelaufnahme bei der Aufzucht von Jungtieren geeignet. Es sei erwähnt, dass derartige Ergänzungsfuttermittel für alle Tierarten einsetzbar sind und auch für den ökologischen Landbau zugelassen wurden.

Gemäß einer weiteren Ausführungsform der Erfindung ist das Ergänzungsfuttermittel homogen über das Volumen des Saugers verteilt.

Das Versetzen des Saugers mit dem Ergänzungsfuttermittel erfolgt daher erfindungsgemäß nicht über ein Beschichten, sondern über eine Beigabe des Ergänzungsfuttermittels bei der Herstellung aus Naturkautschuk.

Gemäß einer weiteren Ausführungsform der Erfindung ist das Ergänzungsfuttermittel in einer Konzentration von ungefähr 1,5 Gew.-% dem Kautschukmaterial beigemischt.

Versuche haben gezeigt, dass bei Kälbern eine Beimengung von Ergänzungsfuttermittel mit diesem Anteil einen positiven Einfluss auf die Nahrungsaufnahme und die Tiergesundheit ausübt, wobei gleichzeitig die mechanische Stabilität des Saugers immer noch gewährleistet ist, ohne dass es dabei zu verstärkter Rissbildung oder dergleichen kommen kann.

Gemäß einer weiteren Ausführungsform der Erfindung ist der Reizstoff ein auf die Schleimhaut des Säugetiers wirkender Duftstoff. Dabei kann der Duftstoff einen für einen Menschen wahrnehmbaren Duftstoff abgeben.

Zunächst sei bemerkt, dass hier das Reizmittel nicht auf das Tier wirkt, da als Schleimhaut des Säugetiers diejenige des Benutzers oder der Benutzerin gemeint ist. Der Duftstoff beeinflusst daher den Benutzer oder die Benutzerin, so dass dadurch ein angenehmerer Geruch herrscht, was die Verabreichung von Nahrungsmitteln beispielsweise im Stall für den Benutzer oder die Benutzerin mit einer positiven Wahrnehmung verbindet. Als Duftstoff kommt hier insbesondere ein Vanillegeruch oder ein Schokoladengeruch in Frage, andere Duftstoffe sind jedoch nicht ausgeschlossen.

Gemäß einer weiteren Ausführungsform der Erfindung ist der Reizstoff ein auf die Schleimhaut des Säugetiers wirkender Geschmacksstoff. Dabei kann der Geschmacksstoff für ein Tier, insbesondere ein Kalb wahrnehmbar sein.

Als Geschmacksstoffe können insbesondere süß-schmeckende Aromen eingesetzt werden, aus Gründen der Tiergesundheit beispielsweise Stevia oder dergleichen. Süßstoffe werden mit einer gesteigerten Futtermittelaufnahme in Verbindung gebracht, die Verwendung anderer Stoffe, wie z.B. Steviol ist nicht ausgeschlossen.

Die oben genannte Aufgabe wird auch durch ein Verfahren zur Herstellung eines Saugers für eine Tränkvorrichtung, insbesondere für einen Tränkeimer oder für eine Steigrohrvorrichtung gelöst, wobei die nachfolgend beschriebenen Schritte ausgeführt werden. Zunächst erfolgt ein Bereitstellen von natürlichem Rohkautschuk und ein Bereitstellen eines oder mehrerer Zusatzstoffe. Nach einem Mischen und Homogenisieren des Rohkautschuks und des oder der Zusatzstoffe zu einem Gemisch, erfolgt ein Kühlen des Gemisches bis zur Weiterverarbeitung. Anschließend erfolgt ein Vulkanisieren des Gemisches in einer Form, die den Außenabmessungen des Saugers nachgebildet ist.

Demnach wird der Zusatzstoff, der beispielsweise in Form des Ergänzungsfuttermittels vorliegt, bei der Produktion des Saugers homogen über das Volumen verteilt, so dass sich innerhalb des Volumens des Saugers im Wesentlichen gleiche Konzentrationen des Zusatzstoffs innerhalb des Naturkautschuks ausbilden. Wichtig ist eine schonende Behandlung des Gemisches, welche bis zur weiteren Verarbeitung gekühlt wird, um bei der Herstellung des Saugers die Funktionalität des Zusatzstoffs während der Lagerung zu erhalten.

Gemäß einer Ausführungsform der Erfindung wird das Vulkanisieren mit einer niedrigen Temperatur, insbesondere mit weniger als 70° durchgeführt.

Aufgrund dieser Vorgehensweise wird sichergestellt, dass bei der Herstellung des Saugers die Funktionalität des Zusatzstoffs erhalten bleibt, ohne dies durch eine zu hohe Temperatur thermisch zu zersetzen.

Gemäß einer weiteren Ausführungsform der Erfindung wird das Homogenisieren durchgeführt, indem die Korngröße der Ausgangsstoffe aufeinander abgestimmt ist.

Um das homogene Verteilen der beiden Ausgangsstoffe zu erleichtern, werden die Korngrößen der Ausgangsstoffe so abgestimmt, dass mittels eines Mischvorgangs eine im Wesentlichen gleiche Konzentration vorliegt. Hierbei werden typischerweise die Korngrößen der Ausgangsstoffe in etwa gleich gewählt, so dass kein Entmischen erfolgt.

Dabei kann die Konzentration des als Ergänzungsfuttermittel ausgebildeten Reizstoffs als Zusatzstoff in etwa 1,5 Gew.-% betragen und neben Natriumformiat und Ameisensäure mit Pflanzenextrakten und Pflanzenöl versetzt sein.

Der Zusatzstoff kann auch ein Streckmittel, ein Aktivierungsmittel oder ein antimikrobieller Zusatz sein.

Nachfolgend werden einige Ausführungsbeispiele anhand der Zeichnung näher erläutert. Es zeigen:
- Figur 1A: schematisch einen Sauger in einer perspektivischen Seitenansicht gemäß einer ersten Ausführungsform der Erfindung,
- Figur 1B: einen Sauger in einer perspektivischen Seitenansicht gemäß einer zweiten Ausführungsform der Erfindung,
- Figur 2: schematisch Schritte beim Herstellen eines erfindungsgemäßen Saugers und Ausüben eines erfindungsgemäßen Verfahrens,
- Figur 3: einen Schnitt durch die Seitenwand eines erfindungsgemäßen Saugers gemäß einer der Figuren 1A oder 1B.

In den Figuren sind gleiche oder funktional gleich wirkende Bauteile mit den gleichen Bezugszeichen versehen.

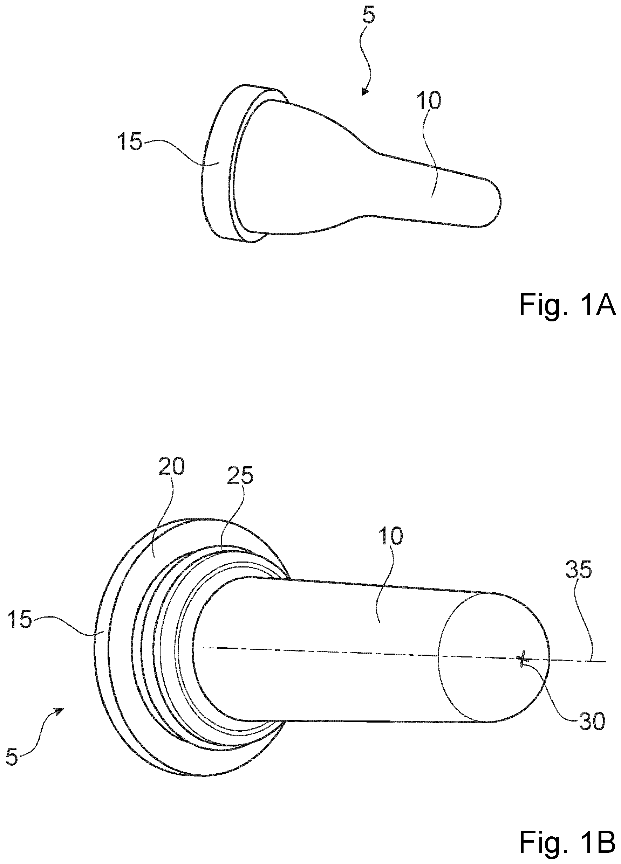

Unter Bezugnahme auf Figur 1A wird nachfolgend eine erste Ausführungsform eines erfindungsgemäßen Saugers 5 gezeigt. Der Sauger 5 ist aus einem Naturkautschukmaterial hergestellt, das mit einem Ergänzungsfuttermittel versetzt ist. Der Sauger 5 weist typischerweise eine rotationssymmetrische Außenwand 10 auf, die sich in ihrer Form an einem Muttertier orientiert. Gegenüber einem Saugende ist ein Kragen 15 angeordnet, der im Zusammenspiel mit einem Ventil für eine Befestigung an einem Tränkeimer oder einer Steigrohrvorrichtung herangezogen werden kann. Eine derartige Vorgehensweise ist an sich bekannt, wobei eine Vielzahl unterschiedlicher Ventilsysteme existieren, die jedoch alle mit dem erfindungsgemäßen Sauger 5 ausgestattet werden können.

In Figur 1B ist ein weiterer Sauger 5 gezeigt, bei dem zusätzlich zum Kragen 15, der mit einer Anlagefläche 20 ausgebildet ist, eine Gegenfläche 25 angeordnet ist, so dass der Sauger 5 zwischen Kragen 15 und Gegenfläche 25 in eine Öffnung eingeführt werden kann. Am Saugende kann sowohl ein kreuzartiger Einschnitt 30 oder auch eine andere Öffnung, beispielsweise in Form eines Lochs gebildet sein. Der Sauger 5 ist wiederum entlang einer Längsachse 35 rotationssymmetrisch abgebildet, wobei in anderen Ausführungsformen auch eine nicht rotationssymmetrische Anordnung gewählt werden kann.

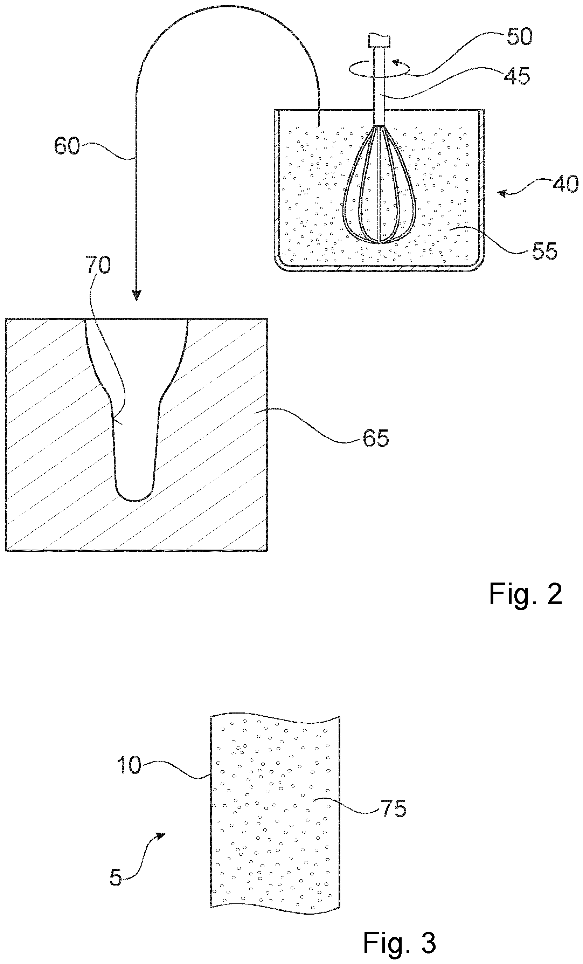

Die unterschiedlichen Außenwände 10 des Saugers 5 gemäß Figur 1A und gemäß Figur 1B verdeutlichen, dass neben der Auswahl eines Naturkautschukmaterials bisher lediglich die Form des Saugers 5 beachtet wurde, wobei der in Figur 1A gezeigte Sauger 5 eher bei Ziegen Anwendung finden dürfte, während der in Figur 1B gezeigte Sauger 5 für Kälber geeigneter wäre. Erfindungsgemäß wird jedoch zusätzlich nun bei der Herstellung des Saugers 5 das Ergänzungsfuttermittel eingebracht, wobei die notwendigen Schritte beispielhaft an Figur 2 erläutert werden. In einem Mischer 40 wird über eine Mischvorrichtung 45, die sich beispielsweise in eine Rotationsbewegung 50 versetzen lässt, eine Mischung aus pulverförmigem Naturkautschukmaterial und granulatförmigen Ergänzungsfuttermittel eingebracht, wobei das Ausgangsmaterial schematisch in Figur 2 mit den Bezugszeichen 55 angedeutet ist. Die Beimischung von Ergänzungsfuttermittel kann dabei mit bis zu 2 Gew.-% erfolgen, wobei das Mischen im Mischer 40 für eine homogene Verteilung des Ergänzungsfuttermittels innerhalb der Naturkautschukpartikel sorgt. Nachdem das Ausgangsmaterial 55 homogenisiert wurde, wird dieses in eine Form 65 überführt, was anhand des Bezugszeichens 60 angedeutet ist. Die Form ist dabei bezüglich ihrer Innenseite 70 so ausgebildet, dass die Außenabmessungen des Saugers 5 nachgebildet werden. Anschließend erfolgt ein Temperaturschritt, so dass das Naturkautschukmaterial vulkanisiert wird, ohne dabei das Ergänzungsfuttermittel thermisch zu zersetzen. Das Vulkanisieren eines Saugers ist an sich aus dem Stand der Technik bekannt, wobei hier insbesondere auf einen Vulkanisiervorgang bei niedriger Temperatur geachtet werden soll, der beispielsweise mit bis zu 70° C ausgeführt wird, ohne dabei das Ergänzungsfuttermittel zu zerstören.

Im Ergebnis erhält man nun die Außenwand 10 des Saugers 5, wie sie in Figur 3 in einer Schnittansicht gezeigt ist. Das Ergänzungsfuttermittel 75 ist hierbei homogen über die Außenwand 10 des Saugers 5 verteilt. Das Ergänzungsfuttermittel 75 wird insbesondere mit Natriumformiat und Ameisensäure bereitgestellt, wobei zusätzlich Pflanzenextrakte und Pflanzenöl beigemischt wurde. Ein derartiges Fütterungssäuregranulat kann auch im ökologischen Landbau eingesetzt werden und ist mit den entsprechenden Siegeln von Zertifizierungsstellen versehen. Neben einem antimikrobiellen und einem antiinflammatorischen Effekt führt die Beigabe von Ergänzungsfuttermittel auch zur erhöhten Futteraufnahme, wobei im Magen und im Dünndarm des Jungtieres weitere vorteilhafte Effekte erzielt werden können. Neben einem gesenkten pH-Wert und einer Reduzierung von Koli-Keimen und Salmonellen erhöht die Beigabe des Ergänzungsfuttermittels auch die Nährstoffverdaulichkeit und die Sekretion von Verdauungssäften und fördert die natürliche Mikroflora im Magen und im Darm. Als weitere Zusatzstoffe können auch ein Streckmittel, ein Aktivierungsmittel oder ein antimikrobieller Zusatz beigemischt sein. Der antimikrobielle Zusatz kann Additiv auf Metallbasis, insbesondere auf Silberbasis gebildet sein.

Bisher wurde der Reizstoff als Ergänzungsfuttermittel 75 beschrieben. Gemäß einer weiteren Ausführungsform der Erfindung ist der Reizstoff ein auf die Schleimhaut des Säugetiers wirkender Duftstoff. Dabei kann der Duftstoff einen für einen Menschen wahrnehmbaren Duftstoff abgeben. Der Reizstoff kann aber auch ein auf die Schleimhaut des Säugetiers wirkender Geschmacksstoff sein. Dabei kann der Geschmacksstoff für ein Tier, insbesondere ein Kalb wahrnehmbar sein.

Der Duftstoff beeinflusst daher den Benutzer oder die Benutzerin, so dass dadurch ein angenehmerer Geruch herrscht, was die Verabreichung von Nahrungsmitteln beispielsweise im Stall für den Benutzer oder die Benutzerin mit einer positiven Wahrnehmung verbindet. Als Duftstoff kommt hier insbesondere ein Vanillegeruch oder ein Schokoladengeruch in Frage, andere Duftstoffe sind jedoch nicht ausgeschlossen. Als Geschmacksstoffe können insbesondere süß-schmeckende Aromen eingesetzt werden, aus Gründen der Tiergesundheit beispielsweise Stevia oder dergleichen. Süßstoffe werden mit einer gesteigerten Futtermittelaufnahme in Verbindung gebracht, die Verwendung anderer Stoffe, wie z.B. Steviol ist nicht ausgeschlossen.

In wiederum anderen Ausführungsformen der Erfindung können der Reizstoff auch als unterschiedliche Kombinationen von Ergänzungsfuttermittel 75, Duftstoff oder Geschmacksstoff beigemengt werden, wobei hier jeweils zwei oder auch drei oder mehr Stoffe enthalten sein können.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

### Liste der Bezugszeichen:

- 5: Saugers
- 10: Außenwand
- 15: Kragen
- 20: Anlagefläche
- 25: Gegenfläche
- 30: Einschnitt
- 35: Längsachse
- 40: Mischer
- 45: Mischvorrichtung
- 50: Rotationsbewegung
- 55: Ausgangsmaterial
- 60: Überführen
- 65: Form
- 70: Innenseite
- 75: Reizstoff, Ergänzungsfuttermittel

## Patentansprüche

1. Sauger für eine Tränkvorrichtung, insbesondere für einen Tränkeimer oder für eine Steigrohrvorrichtung zur Fütterung eines Jungtiers, der aus einem Naturkautschukmaterial gefertigt ist, das mit einem auf eine Schleimhaut eines Säugetiers wirkenden Reizstoff versetzt ist.

2. Sauger nach Anspruch 1, bei dem der Reizstoff ein Ergänzungsfuttermittel ist, wobei das Naturkautschukmaterial mit dem Ergänzungsfuttermittel in einer Konzentration von bis zu 2 Gew.-% versetzt ist.

3. Sauger nach Anspruch 2, bei dem das Ergänzungsfuttermittel als Fütterungssäuregranulat vorliegt.

4. Sauger nach Anspruch 2 oder 3, bei dem das Ergänzungsfuttermittel Natriumformiat und Ameisensäure umfasst, wobei dem Ergänzungsfuttermittel zusätzlich Pflanzenextrakte und Pflanzenöl beigemischt sind.

5. Sauger nach einem der Ansprüche 2 bis 4, bei dem das Ergänzungsfuttermittel homogen über das Volumen des Saugers verteilt ist.

6. Sauger nach einem der Ansprüche 2 bis 5, bei dem das Ergänzungsfuttermittel in einer Konzentration von ungefähr 1,5 Gew.-% dem Kautschukmaterial beigemischt ist.

7. Sauger nach Anspruch 1, bei dem der Reizstoff ein auf die Schleimhaut des Säugetiers wirkender Duftstoff ist.

8. Sauger nach Anspruch 7, bei dem der Duftstoff einen für einen Menschen wahrnehmbaren Duftstoff abgibt.

9. Sauger nach Anspruch 1, bei dem der Reizstoff ein auf die Schleimhaut des Säugetiers wirkender Geschmacksstoff ist.

10. Sauger nach Anspruch 9, bei dem der Geschmacksstoff für ein Tier, insbesondere ein Kalb wahrnehmbar ist.

11. Verfahren zur Herstellung eines Saugers für eine Tränkvorrichtung, insbesondere für einen Tränkeimer oder für eine Steigrohrvorrichtung zur Fütterung eines Jungtiers und nach einem der Ansprüche 1 bis 10, bei dem folgende Schritte ausgeführt werden:
- Bereitstellen von natürlichem Rohkautschuk,
- Bereitstellen eines oder mehrerer Zusatzstoffe,
- Mischen und Homogenisieren des Rohkautschuks und des oder der Zusatzstoffe zu einem Gemisch,
- Kühlen des Gemisches bis zur Weiterverarbeitung, und
- Vulkanisieren des Gemisches in einer Form, die den Außenabmessungen des Saugers nachgebildet ist.

12. Verfahren nach Anspruch 11, bei dem das Vulkanisieren mit einer niedrigen Temperatur, insbesondere mit weniger als 70° C durchgeführt wird.

13. Verfahren nach Anspruch 11 oder 12, bei dem das Homogenisieren so durchgeführt, indem die Korngrößen der Ausgangsstoffe aufeinander abgestimmt sind.

14. Verfahren nach einem der Ansprüche 11 bis 14, bei dem der Zusatzstoff ein Ergänzungsfuttermittel ist und Natriumformiat und Ameisensäure umfasst, sowie mit Pflanzenextrakten und Pflanzenöl versetzt ist, wobei das Ergänzungsfuttermittel eine Konzentration von bis zu 2 Gew.-% aufweist, insbesondere in etwa 1,5 Gew.-% beträgt.

15. Verfahren nach einem der Ansprüche 11 bis 14, bei dem der Zusatzstoff ein Streckmittel, ein Aktivierungsmittel oder ein antimikrobieller Zusatz ist.
